# EUROPEAN PATENT APPLICATION

(11) **EP 1 930 634 A1**
(43) Date of publication of application: **11.06.2008**
(21) Application number: 07254738.3
(22) Date of filing: 07.12.2007
(51) Int. Cl.: F16J 15/32

(54) **Brush seal assemblies utilizing a threaded fastening method**

(30) Priority: 08.12.2006 US 636311
(71) Applicant: United Technologies Corporation, Hartford, CT 06101 (US)
(72) Inventor: Addis, Mark E., Kennebunk, ME 04043 (US)
(74) Representative: Leckey, David Herbert

(57) **Abstract**

A brush seal assembly (10) includes a plurality of bristles (21), a joint (25) securing the bristles, and a retaining assembly. Each of the bristles (21) has a first end (22) and a second end (24). The joint (25) has a first side (26) and a second side (27) and connects the first ends (22) of the bristles (21). The retaining assembly sandwiches the joint (25) and includes a side plate (14), a back plate (16), and a threaded connection. The side plate (14) engages the first side (26) of the joint (25) and the back plate (16) engages the second side (27) of the joint (25). The threaded connection holds the side plate (14) and the back plate (16) in engagement with the joint (25).

## Description

### BACKGROUND OF THE INVENTION

The present invention generally relates to brush seals. In particular, the present invention relates to a brush seal assembly utilizing threaded members.

Brush seals are commonly used in gas turbine engines and other assemblies to restrict the escape of fluid (i.e. air) through a gap between a stationary part and a rotating part. For example, the stationary part may be a diffuser case and the rotating part may be a turbine shaft. Brush seals may also be used to seal gaps between two stationary parts or two rotating parts of a gas turbine engine. In either case, minimization of leakage is important in maintaining the efficiency of the system and to reduce fuel consumption.

A brush seal generally includes packs of wire bristles that are sandwiched between two plates. It is common practice to weld the bristles and plates together. The brush seal must then undergo heat treatment after welding to relieve any residual stresses. Heat treatment typically involves securing the brush seal within a fixture and placing the fixture in an oven. The heat treatment is a time consuming and expensive process.

While effective, the bristles of the brush seal eventually wear and need to be replaced over time. For example, replacement may be scheduled after a given number of hours or cycles of operation. However, because conventional brush seals are welded assemblies, removal of the brush seal can be difficult. In addition, because the individual components of the brush seal are welded together, individual components such as wire bristles cannot easily be replaced. Thus, replacement of the entire brush seal must occur at significant costs in regards to material labor and down time, even though only one of the subassemblies needs replacement.

A current method used that allows replacement of individual components of the brush seal is to manufacture the brush seals in subassemblies without plate welding. These brush seals combine the bristles together and sandwich the bristle packs between the plates using clips or fasteners. While these methods are effective, they also require additional machining under relatively close tolerances, thus increasing the overall cost of production.

### BRIEF SUMMARY OF THE INVENTION

A brush seal assembly according to one aspect of the invention includes a plurality of bristles, a joint, and a retaining assembly. Each of the bristles has a first end and a second end. The joint has a first side and a second side and connects the first ends of the bristles. The retaining assembly sandwiches the joint and includes a side plate, a back plate, and a threaded connection. The side plate engages the first side of the joint and the back plate engages the second side of the joint. The threaded connection holds the side plate and the back plate in engagement with the joint.

### BRIEF DESCRIPTION OF THE DRAWINGS

FIG. 1 is a perspective, partial cross-sectional view of a representative brush seal assembly.
FIG. 2 is a cross-sectional view of a first embodiment of a brush seal assembly.
FIG. 3 is an exploded side view of the first embodiment of the brush seal assembly.
FIG. 4A is a partially exploded side view of the first embodiment of the brush seal assembly having a first bristle assembly.
FIG. 4B is a partially exploded side view of the first embodiment of the brush seal assembly having axial slots.
FIG. 4C is a partially exploded side view of the first embodiment of the brush seal assembly having a second bristle assembly.
FIG. 5 is a diagram of a method of assembling the first embodiment of the brush seal assembly.
FIG. 6 is a cross-sectional view of a second embodiment of a brush seal assembly.
FIG. 7 is a diagram of a method of assembling the second embodiment of the brush seal assembly.

### DETAILED DESCRIPTION

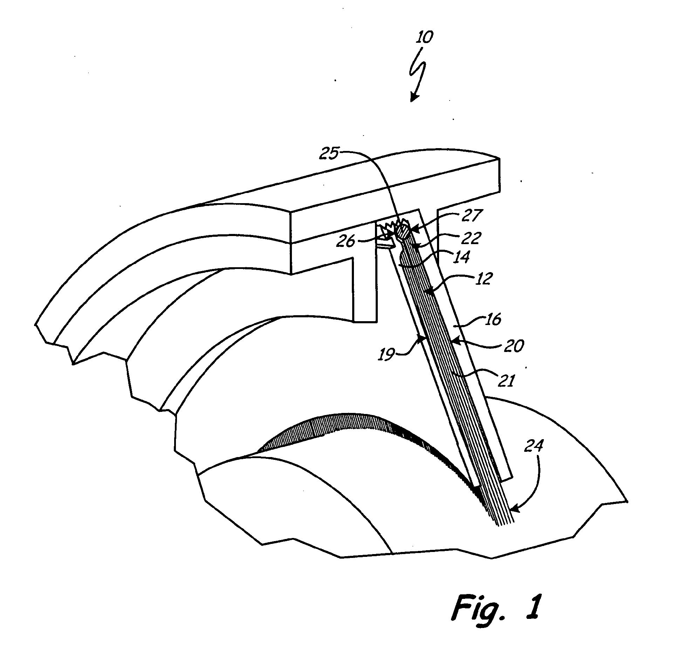

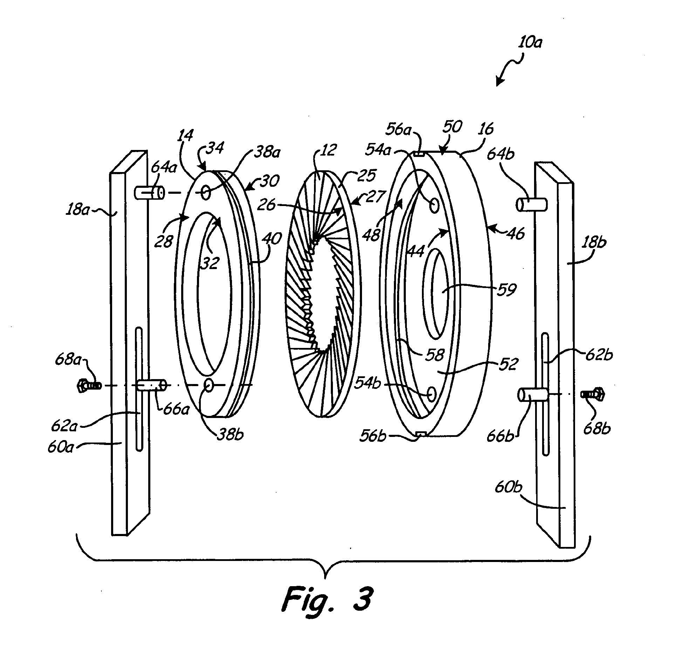

FIG. 1 shows a perspective, cross-sectional view of a representative brush seal assembly 10. Brush seal assembly 10 generally includes bristle assembly 12, side plate 14, and back plate 16. Adjustable pin spanners 18a and 18b (shown in FIG. 3) tighten side plate 14 to back plate 16, sandwiching bristle assembly 12 therebetween. Bristle assembly 12 has a first side 19 and a second side 20 and is formed of a plurality of densely arranged wire bristles 21. Although bristle assembly 12 is depicted in FIG. 1 as having a full ring shape, bristle assembly 12 may have other shapes without departing from the intended scope of the present invention. For example, bristle assembly 12 may have an arcuate, segmented arcuate or linear shape.

Each of wire bristles 21 has a first end 22 and a second end 24. First ends 22 of wire bristles 21 reside at an outer diameter of bristle assembly 12 and are secured together by joint 25, such as a weld, and are generally connected to joint 25 such that wire bristles 21 are angled to a radial line. Joint 25 has a first side 26 in line with first side 19 of bristle assembly 12 and a second side 27 in line with second side 20 of bristle assembly 12. Second ends 24 of wire bristles 21 extend away from joint 25 and reside at an inner diameter of bristle assembly 12. Wire bristles 21 are made of a strong, flexible material. For example, wire bristles 21 may be made of an approximately 0.002 inch (0.05 mm) diameter to an approximately 0.006 inch (0.15 mm) diameter cobalt alloy wire. In an exemplary embodiment, first ends of wire bristles 20 are connected to joint 25 such that they are angled at approximately 45 degrees from a radial line.

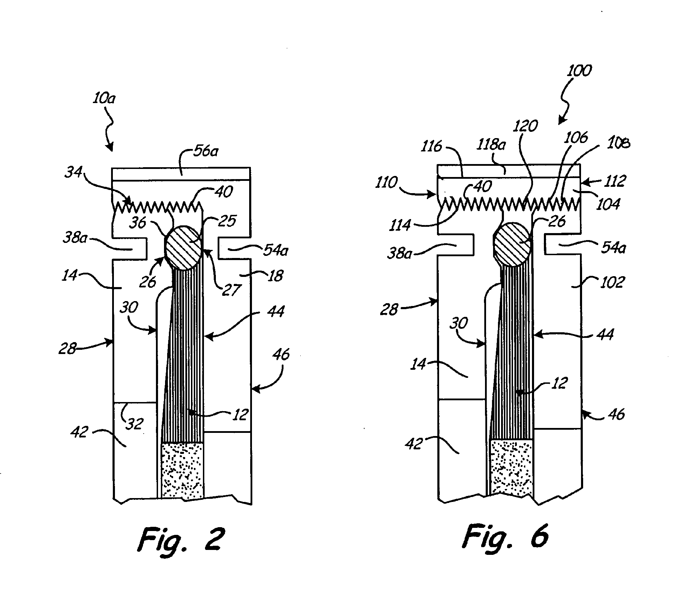

FIGS. 2 and 3 show a cross-sectional view and an exploded view, respectively, of a first embodiment of brush seal assembly 10a, and will be discussed in conjunction with one another. Bristle assembly 12 is positioned between side plate 14 and back plate 16, all of which are removably connected to one another. Pin spanners 18a and 18b are used to assemble side plate 14 and back plate 16 together. Side plate 14 provides a front cover to protect bristle assembly 12 and includes first surface 28, second surface 30, inner diameter 32, outer diameter 34, recess 36, first spanner hole 38a, and second spanner hole 38b (FIG. 3). Outer diameter 34 of side plate 14 includes outer threads 40. Recess 36 is located within second surface 30 of side plate 14 and is sized to accept first side 26 of joint 25 of bristle assembly 12. When brush seal assembly 10 is assembled, first side 20 of bristle assembly 12 is positioned immediately adjacent second surface 30 of side plate 14. A windage cover 42 (shown in FIG. 2) may also be integral to side plate 14 at inner diameter 32 of side plate 14. Although side plate 14 is discussed as having two spanner holes 38a and 38b, side plate 14 may have any number of spanner holes around the circumference of side plate 14. In addition, although outer diameter 34 is discussed as including threads 40, any locking feature known in the art may be used.

Back plate 16 is the primary structural element of brush seal assembly 10a and provides downstream support to brush seal assembly 10a by supporting bristle assembly 12 and preventing bristle blowover due to fluid pressure differential. Back plate 16 includes first surface 44, second surface 46, inner diameter 48, outer diameter 50, back cover 52, first spanner hole 54a, second spanner hole 54b, first axial slot 56a, and second axial slot 56b. Inner diameter 48 of back plate 16 includes inner threads 58 that are engagable with outer threads 40 of side plate 14. Stress calculations may be performed on threads 40 and 58 of side plate 14 and back plate 16, respectively, to determine the optimum thread size and pitch relative to the size of brush seal assembly 10a and the resistive and compressive axial spring rate of bristle assembly 12. Spanner holes 54a and 54b are formed in back cover 52, which extends across second surface 46 of back plate 16. Back cover 52 also has a hole 59 in the center of back cover 52 to position a component, such as a shaft or rotor, with clearance. Although back plate 16 is discussed as having two spanner holes 54a and 54b and two axial slots 56a and 56b, back plate 16 may have any number of spanner holes and axial slots around the circumference of back plate 16. Also, as with side plate 14, although inner diameter 48 is discussed as including threads 58, any locking feature known in the art may be used.

Bristle assembly 12, side plate 14, and back plate 16 are assembled together with the use of adjustable pin spanner tools 18a and 18b. Adjustable pin spanners 18a and 18b allow the same tool to be used on brush seal assemblies having a range of diameters. First adjustable pin spanner 18a generally includes spanner arm 60a, adjustment slot 62a, fixed pin 64a, movable pin 66a, and threaded fastener 68a. Second adjustable pin spanner 18b functions and interacts similarly to first adjustable pin spanner 18a and generally includes spanner arm 60b, adjustment slot 62b, fixed pin 64b, movable pin 66b, and threaded fastener 68b. Adjustable pin spanners 18a and 18b may optionally include a torque measuring device to assure uniform assembly torques.

To assemble brush seal assembly 10a, joint 25 and bristle assembly 12 are positioned against second surface 30 of side plate 14 with first side 26 of joint 25 engaging recess 36 (shown in FIG. 2) of side plate 14. As can be seen in FIG. 3, outer threads 40 of side plate 14 are engageable with inner threads 58 of back plate 16, allowing side plate 14 and bristle assembly 12 to fit within inner diameter 48 of back plate 16. Once in place, threads 40 of side plate 14 are threaded into threads 58 of back plate 16 (shown in FIGS. 2 and 3). Side plate 14 and bristle assembly 12 are threaded within inner diameter 48 of back plate 16 until second side 27 of joint 25 and second side 21 of bristle assembly 12 abuts back cover 52 of back plate 16. Second ends 24 of wire bristles 21 extend past inner diameters 32 and 48 of both side plate 14 and back plate 16, respectively, allowing bristle assembly 12 to reach a component, such as a rotor, to form a seal.

Although not shown in FIGS. 2 and 3, brush seal assembly 10a may optionally include a washer positioned between second surface 30 of side plate 14 and first side 19 of bristle assembly 12, as well as positioned between second side 20 of bristle assembly 12 and first surface 44 of back plate 16. The washers would function to protect wire bristles 21 as side plate 14 and back plate 16 spin against bristle assembly 12 during assembly.

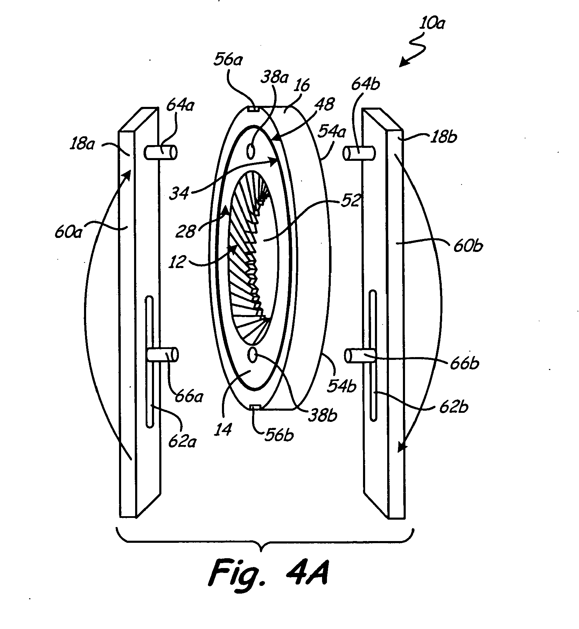

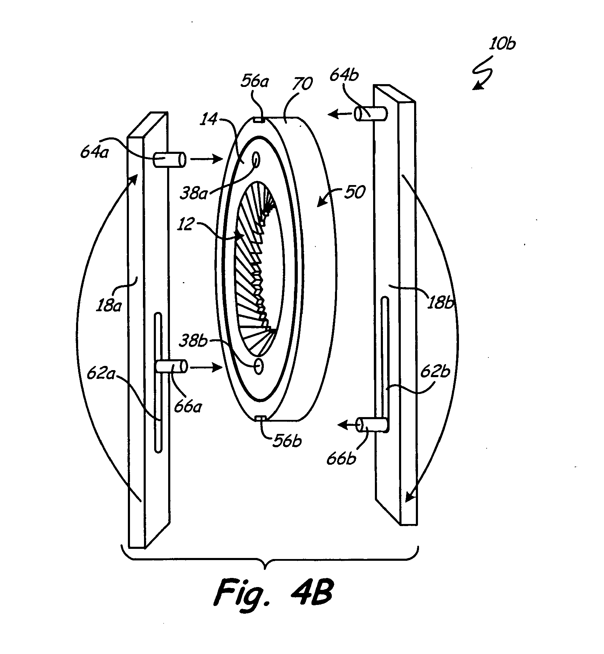

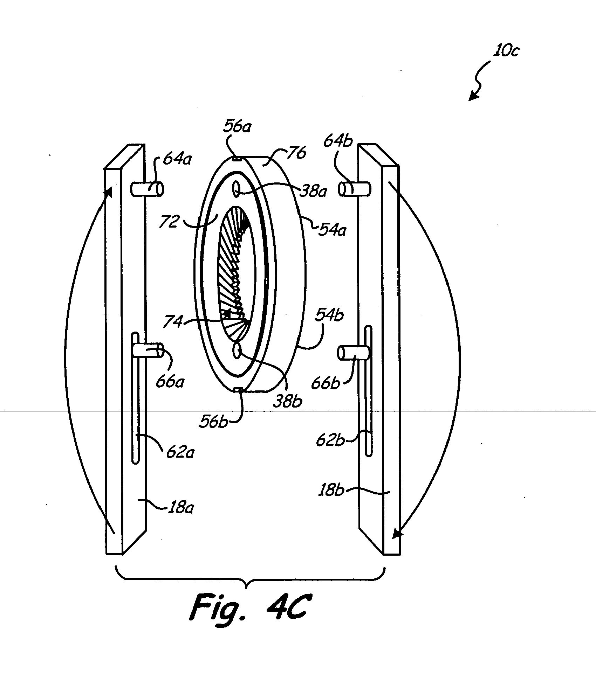

FIGS. 4A-4C show how first and second adjustable pin spanners 18a and 18b are adjustable to work with different size brush seal assemblies and different spanner slot configurations. FIG. 4A shows adjustable pin spanners 18a and 18b in use with spanner holes 38a, 38b, 54a, and 54b of brush seal assembly 10a. FIG. 4B shows adjustable pin spanners 18a and 18b in use with spanner slots 38a and 38 and axial slots 56a and 56b of brush seal assembly 10b. FIG. 4C shows adjustable pin spanners 18a and 18b in use with brush seal assembly 10c having a smaller diameter than brush seal assemblies 10a and 10b.

FIG. 4A shows a side view of brush seal assembly 10a. After side plate 14 and bristle assembly 12 are positioned within back plate 16, first adjustable pin spanner 18a is positioned immediately adjacent first surface 28 of side plate 14. Fixed pin 64a of first adjustable pin spanner 18a is aligned with, and engages, first spanner hole 38a of side plate 14. Movable pin 66a is then adjusted within adjustment slot 62a until aligned with second spanner hole 38b of side plate 14. Movable pin 66a is then positioned within second spanner hole 38b and is maintained in place within adjustment slot 62a by threaded fastener 68a. Similarly, spanner arm 60b of adjustable pin spanner 18b is positioned immediately adjacent second surface 46 of back plate 16 and engages back plate 16 in the same manner that first adjustable pin spanner 18a engages side plate 14.

In this position, adjustable pin spanners 18a and 18b sandwich bristle assembly 12 between side plate 14 and back plate 16, which form brush seal assembly 10a. After first and second adjustable pin spanners 18a and 18b are connected to side plate 14 and back plate 16, respectively, adjustable pin spanners 18a and 18b are turned in opposing directions (as shown by arrows in FIG. 4A) to tighten side plate 14, bristle assembly 12, and back plate 16 together. As adjustable pin spanners 18a and 18b turn in opposing directions, side plate 14 is turned in the same direction as first adjustable pin spanner 18a and back plate 16 is turned in the same direction as second adjustable pin spanner 18b. Because side plate 14 and back plate 16 are turning in opposing directions, side plate 14 and back plate 16 are further threaded together by outer threads 40 of side plate 14 engaging inner threads 58 of back plate 16. After brush seal assembly 10a is threaded together, adjustable pin spanners 18a and 18b may be removed from side plate 14 and back plate 16.

As previously mentioned, side plate 14 and back plate 16 may each have more than two spanner holes. The additional spanner holes provide leverage for a user turning adjustable pin spanners 18a and 18b and may help facilitate threading of side plate 14 and back plate 16 if clearance is limited. Depending on the position of the spanner holes relative to the assembler, it may be advantageous for the assembler to remove pins 64a, 64b, 66a, and 66b of adjustable pin spanners 18a and 18b from the original spanner holes and place them in different spanner holes to find the best leverage for threading side plate 14 and back plate 16 together. Thus, the assembler is able to place adjustable pin spanners 18a and 18b at different locations around the circumferences of side plate 14 and back plate 16 as necessary to obtain optimal handling of brush seal assembly 10a.

FIG. 4B shows a side view of brush seal assembly 10b which generally includes a back plate 70, bristle assembly 12, and side plate 14. While first adjustable pin spanner 18a interacts with side plate 14 in the manner described for brush seal assembly 10a, fixed pin 64b and movable pin 66b of second adjustable pin spanner 18b engage axial slots 56a and 56b of back plate 70. Once fixed pin 64b is positioned within first axial slot 56a, movable pin 66b is adjusted within adjustment slot 62b and aligned with second axial slot 56b. Once fixed pin 64b and movable pin 66b are properly positioned within axial slots 56a and 56b, respectively, brush seal assembly 10b is tightened in a similar manner as brush seal assembly 10a. Axial slots 56a and 56b may be used to tighten brush seal assembly 10b if back cover 52 of back plate 70 does not include spanner holes 54a and 54b, if back plate 70 optionally does not include a back cover, or if it is more convenient to use axial slots 56a and 56b.

Similar to brush seal assembly 10a, side plate 14 may have more than two spanner holes and back plate 16 may have more than two axial slots. The additional spanner holes and axial slots function in the same manner as the additional spanner holes in brush seal assembly 10a, providing leverage for a user turning adjustable pin spanners 18a and 18b.

FIG. 4C shows a side view of brush seal assembly 10c having side plate 72, bristle assembly 74, and back plate 76. The components of brush seal assembly 10c interact and function similarly to the components of brush seal assembly 10a described in the discussion of FIG. 4A, except that the outer diameters of side plate 72, bristle assembly 74, and back plate 76 are smaller than the outer diameters of side plate 14, bristle assembly 12, and back plate 16 (shown in FIG. 4A). Because the diameters of brush seal assembly 10c are smaller than the diameters brush seal assembly 10a, movable pins 66a and 66b of first and second adjustable pin spanners 18a and 18b must be accordingly adjusted. Movable pins 66a and 66b are adjusted within adjustment slots 62a and 62b, respectively, until first movable pin 66a is engagable with second spanner hole 38b of side plate 72 and second movable pin 66b is engagable with second spanner hole 54b of back plate 76. After fixed pins 64a and 64b and movable pins 66a and 66b are positioned within side plate 72 and back plate 76, brush seal assembly 10c is tightened by first and second adjustable pin spanners 18a and 18b in the same manner as side brush seal assembly 10a. Although FIG. 4C depicts a brush seal assembly having a smaller diameter than brush seal assembly 10a, brush seal assemblies of any diameter may be joined together using adjustable pin spanners 18a and 18b, including a brush seal assembly having a larger diameter than brush seal assembly 10c.

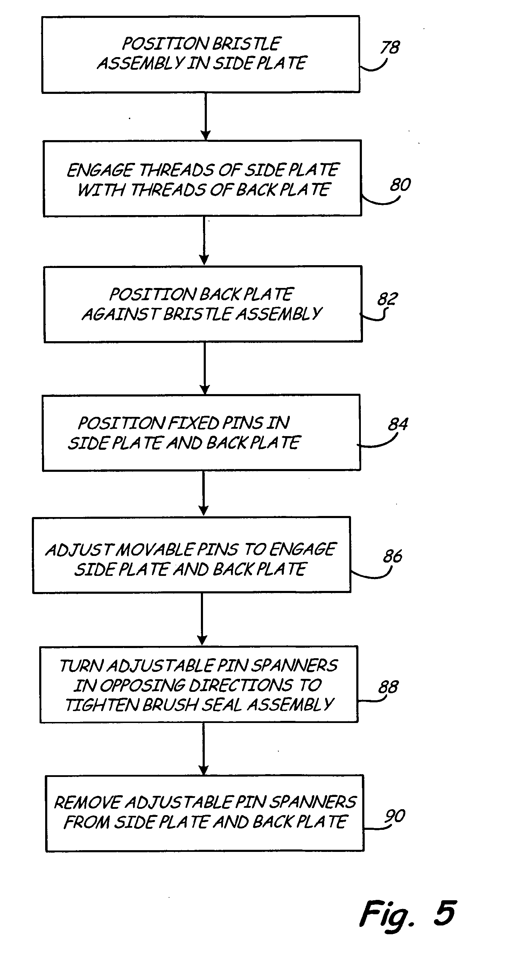

FIG. 5 shows a diagram of a method of assembling brush seal assembly 10. Bristle assembly 12 is first positioned in recess 36 of side plate 14, Box 78. Threads 40 of side plate 14 are then engaged with mating threads 58 of back plate 16, Box 80. As depicted in Box 82, as side plate 14 and back plate 16 are threaded together, first surface 44 of back plate 16 is positioned immediately adjacent bristle assembly 12 such that bristle assembly 12 is sandwiched between side plate 14 and back plate 16. Fixed pins 64a and 64b are positioned within first spanner hole 38a of side plate 14 and first spanner hole 54a of back plate 16, respectively, Box 84. As optionally shown in Box 86 (optional), movable pins 66a and 66b are then adjusted within adjustment slots 62a and 62b until they are positioned to engage second spanner holes 38b and 54b of side plate 14 and back plate 16, respectively. Note that movable pins 66a and 66b need only be adjusted for different sized seals. Adjustable pin spanners 18a and 18b are then turned in opposing directions to tighten side plate 14, bristle assembly 12, and back plate 16 together, Box 88. After brush seal assembly 10 is threaded together, adjustable pin spanners 18a and 18b may be disengaged from side plate 14 and back plate 16, Box 90.

FIG. 6 shows a cross-sectional view of brush seal assembly 100 which generally includes bristle assembly 12, side plate 14, back plate 102, and retaining ring 104. Brush seal assembly 100 functions similarly to brush seal assembly 10a except that brush seal assembly 100 includes retaining ring 104 and outer diameter 106 of back plate 102 includes outer threads 108. Retaining ring 104 is also threaded and connects side plate 14 and back plate 102 together. Retaining ring 104 has first surface 110, second surface 112, inner diameter 114, outer diameter 116, first axial slot 118a, and second axial slot 118b (not shown in FIG. 6, second axial slot 118b is positioned similarly to second axial slot 56b of brush seal assembly 10a shown in FIG. 3). Inner diameter 114 of retaining ring 104 includes inner threads 120 for engaging outer threads 40 of side plate 14 and outer threads 108 of back plate 102. After joint 25 is positioned within recess 36 of side plate 14, first surface 44 of back plate 102 is positioned immediately adjacent bristle assembly 12. Outer threads 40 of side plate 14 and outer threads 58 of back plate 102 are then threaded to inner threads 120 of retaining ring 104, creating brush seal assembly 100.

First adjustable pin spanner 18a is then positioned against first surface 28 of side plate 14 and second adjustable pin spanner 18b is positioned against second surface 46 of back plate 102. Fixed pins 64a and 64b are positioned within first spanner holes 38a and 54a of side plate 14 and back plate 102, respectively. Movable pins 66a and 66b are then optionally adjusted within adjustment slots 62a and 62b until they are positioned to engage second spanner holes 38b and 54b of side plate 14 and back plate 102, respectively. Once fixed pins 64a and 64b and movable pins 66a and 66b are engaging spanner holes 38a, 38b, 54a, 54b of side plate 14 and back plate 102, adjustable pin spanners 18a and 18b are turned in the same direction to tighten side plate 14 and back plate 102 to retaining ring 104. As adjustable pin spanners 18a and 18b turn side plate 14 and back plate 102, retaining ring 104 is held stationary by axial slots 118a and 118b. As side plate 14 and back plate 102 are turned within retaining ring 104, outer threads 40 of side plate 14 and outer threads 108 of back plate 102 are threaded to threads 120 of retaining ring 104. Although retaining ring 104 is discussed as being held stationary by axial slots 118a and 118b, retaining ring 104 may be held stationary by any means known in the art, including, but not limited to: some other feature on outer diameter 116 of retaining ring 104, by a fixture, or by a vise.

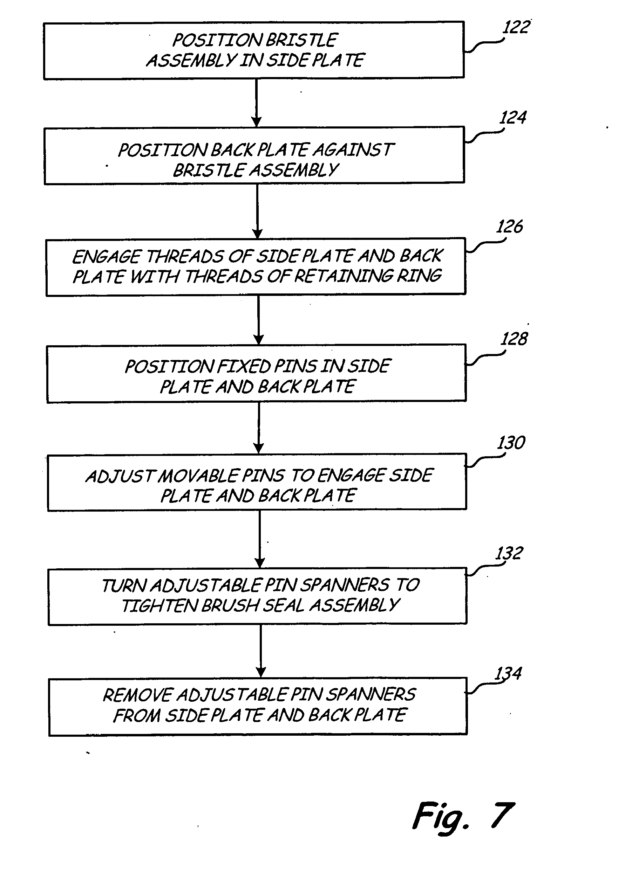

FIG. 7 shows a diagram of a method of assembling brush seal assembly 100. Bristle assembly 12 is first positioned in recess 36 of side plate 14, Box 122. As depicted in Box 124, first surface 44 of back plate 102 is then positioned adjacent bristle assembly 12 such that bristle assembly 12 is sandwiched between side plate 14 and back plate 102. Outer threads 40 of side plate 14 and outer threads 108 of back plate 102 are then engaged with mating threads 120 of retaining ring 104 to thread side plate 14, bristle assembly 12, and back plate 102 within retaining ring 104, Box 126. Fixed pins 66a and 66b are positioned within first spanner holes 38a and 54a of side plate 14 and back plate 102, respectively, Box 128. As shown in optional Box 130, movable pins 68a and 68b are then optionally adjusted within adjustment slots 62a and 62b until they are aligned to engage second spanner holes 38b and 54b of side plate 14 and back plate 102, respectively. Adjustable pin spanners 18a and 18b are then turned while retaining ring 104 is maintained in position, tightening side plate 14 and back plate 102 within retaining ring, Box 132. Once brush seal assembly 100 is threaded together, adjustable pin spanners 18a and 18b may be removed from side plate 14 and back plate 102, Box 134.

The brush seal assembly disclosed herein provides a convenient, inexpensive, no-weld method of sandwiching a bristle assembly between a side plate and a back plate to form the brush seal assembly. By eliminating the welding step and subsequent stress-relieving heat treatment of the full brush seal assembly, the manufacturing time and cost of the brush seal assembly is significantly reduced. The brush seal assembly uses threading and adjustable pin spanners to easily assemble and disassemble the brush seal assembly. In addition, the simple disassembly and reassembly of the brush seal assembly also allows for easy replacement of individual components. For example, the bristle assembly may be easily replaced with various wire materials and wire diameters. Similarly, the side plate and back plate may also be replaced with various materials and machined critical inner diameters. Lastly, various brush seal assembly combinations may be used that cannot be joined through conventional welding processes. The materials may include, but are not limited to: non-compatible metals, plastic-metal combinations, or high temperature carbon-based materials. The brush seal assembly may be used in any application where a seal is desired, including, but not limited to, a gas turbine engine.

Although the present invention has been described with reference to preferred embodiments, workers skilled in the art will recognize that changes may be made in form and detail without departing from the scope of the invention.

## Claims

1. A brush seal assembly (10; 100) comprising:
a plurality of bristles (21), each of the bristles (21) having a first end (22) and a second end (24);
a joint (25) for connecting the first ends (22) of the bristles (21), the joint (25) having a first side (26) and a second side (27); and
a retaining assembly for sandwiching the joint (25), the retaining assembly including a side plate (14) for engaging the first side (26) of the joint (25), a back plate (16; 102) for engaging the second side (27) of the joint (25), and a threaded connection for holding the side plate (14) and the back plate (16; 102) in engagement with the joint (25).

2. A brush seal assembly (10; 100) comprising:
a bristle assembly (12) having a first side (19) and a second side (20); and
a retaining assembly including a threaded connection, a first retaining plate (14) positioned adjacent the first side (19) of the bristle assembly (12), and a second retaining plate (16; 102) positioned adjacent the second side (20) of the bristle assembly (12).

3. The brush seal assembly of claim 1 or 2, wherein the first retaining plate (14) or side plate (14) has outer threads (40) and the second retaining plate (16) or back plate (16) has inner threads (58) engagable with the outer threads (40) of the first retaining plate (14) or side plate (14) to form the threaded connection.

4. The brush seal assembly of claim 1 or 2, wherein the first retaining plate (14) or side plate (14) has outer threads (40) and the second retaining plate (102) or back plate (102) has outer threads (108).

5. The brush seal assembly of claim 4, wherein the retaining assembly further comprises a retaining ring (104) having inner threads (120) engagable with the outer threads (40) of the first retaining plate (14) or side plate (14) and the outer threads (108) of the second retaining plate (102) or back plate (102) to form the threaded connection.

6. The brush seal assembly of any of claims 1, 2 or 3, wherein the first retaining plate (14) or side plate (14) is positioned within the second retaining plate (16) or back plate (16).

7. The brush seal assembly of any preceding claim, wherein the first retaining plate (14) or side plate (14) has a first spanner hole (38a) and a second spanner hole (38b) engageable with a first adjustable pin spanner (60a) and the second retaining plate (16; 102) or back plate (16; 102) has a first spanner hole (54a) and a second spanner hole (54b) engageable with a second adjustable pin spanner (60b).

8. The brush seal assembly of any preceding claim, wherein the first retaining plate (14) or side plate (14) has a first spanner hole (38a) and a second spanner hole (38b) engageable with a first adjustable pin spanner (60a) and the second retaining plate (16; 102) or back plate (16; 102) has a first axial slot (56a) and a second axial slot (56b) engageable with a second adjustable pin spanner (60b).

9. A method for assembling a brush seal assembly (10; 100) comprising:
positioning a bristle assembly (12) between a first plate (14) and a second plate (16; 102) of a retaining assembly;
engaging threads (40) of the first plate (14) with first mating threads (58; 120) of the retaining assembly;
engaging threads (58; 108) of the second plate (16; 102) with second mating threads (40; 120) of the retaining assembly; and
securing the first plate (14) to the second plate (16; 102).

10. The method of claim 9, wherein engaging the threads (40) of the first plate (14) with first mating threads comprises engaging the threads (40) of the first plate (14) with the threads (58) of the second plate (16).

11. The method of claim 9 or 10, wherein engaging the threads (58) of the second plate (16) with second mating threads comprises engaging the threads (58) of the second plate (16) with the threads (40) of the first plate (14).

12. The method of claim 9, wherein engaging the threads of the first plate (14) with first mating threads and engaging the threads of the second plate (16) with second mating threads comprises engaging the threads (40) of the first plate (14) and the threads (108) of the second plate (102) with threads (120) of a retaining ring (104).

13. The method of any of claims 9 to 12, wherein securing the first plate (14) to the second plate (16; 102) comprises using at least one adjustable pin spanner (60a).

14. The method of claim 13, wherein securing the first plate (14) to the second plate (16; 102) further comprises using a second adjustable pin spanner (60b).

15. The method of claim 14, wherein securing the first plate (14) to the second plate (16; 102) comprises engaging pins (64a, 66a) of the first adjustable pin spanner (60a) with holes (38a, 38b) of the first plate (14) and engaging pins (64b, 66b) of the second adjustable pin spanner (60b) with holes (54a, 54b) of the second plate (16; 102).

16. The method of claim 15, wherein securing the first plate (14) to the second plate (16; 102) comprises turning the first adjustable pin spanner (60a) and the second adjustable pin spanner (60b) in opposing directions.
